# EUROPÄISCHE PATENTSCHRIFT

(11) **EP 0 426 955 B1**
(45) Veröffentlichungstag und Bekanntmachung des Hinweises auf die Patenterteilung: **25.01.1995**
(21) Anmeldenummer: 90115273.6
(22) Anmeldetag: 09.08.1990
(51) Int. Cl.: B01D 45/12, H01M 8/04

(54) **Gas-Wassergemisch-Separator zur Benutzung bei Schwerelosigkeit**
Gas-water mixture for use in conditions of weightlessness
Séparateur pour un mélange gaz-eau, destiné à être utilisé en apesanteur

(30) Priorität: 29.09.1989 DE 3932578
(43) Veröffentlichungstag der Anmeldung: 15.05.1991
(73) Patentinhaber: DORNIER GMBH, D-88004 Friedrichshafen (DE)
(72) Erfinder: Fleck, Wolfram, Dipl.-Ing., D-7990 Friefrichshafen 5 (DE); Muschelknautz, Edgar, Prof.Dr., D-7000 Stuttgart 1 (DE)
(74) Vertreter: Landsmann, Ralf, Dipl.-Ing.

(56) Entgegenhaltungen:
- EP-A- 0 287 035
- CH-A- 594 439
- FR-A- 1 439 600
- INTERNATIONAL JOURNAL OF HYDROGEN ENERGY INTERNATIONAL Bd.14, Nr. 12, 1989,OXFORD/GB, Seiten 915-925; K.KORDESCH et al: "FUEL CELL RESEACH AND DEVELOMENT IN AUSTRIA"

## Beschreibung

Die Erfindung betrifft einen auch bei Schwerelosigkeit (Null-g-Bedingungen) wirksam arbeitenden Separator.

In der Raumfahrttechnik werden zum Beispiel bei Raumgleitern Systeme für die Erzeugung von Energie benötigt. Es können Batterien oder Brennstoffzellen zur Abdeckung des Energiebedarfs verwendet werden.

Brennstoffzellen können alkaline Systeme sein, bei denen Wasserstoff H₂ und Sauerstoff 0₂ mittels alkalischen Elektrolyts in elektrische Energie umgewandelt werden. Bei der Reaktion von Wasserstoff und Sauerstoff entstehen neben der erzeugten elektrischen Energie auch Produktwasser und Reaktionswärme.

Technologisch werden zwei Arbeitsprinzipien der alkalinen Brennstoffzellen unterschieden:
- Beim "mobilen System" dient Kalilauge K0H als Kühlmittel der Zelle, als Wasseraustragssystem und als Elektrolyt.
- Beim "immobilen System" dient ebenfalls Kalilauge als Elektrolyt. Die Kalilauge ist aber im Gegensatz zum mobilen System in einer Matrix aufgesaugt und erfüllt nur die elektrochemischen Aufgaben. Um beim immobilen System die Verdünnung der Elektrolytkonzentration durch Produktwasser zu verhindern, wendet man den nachfolgend beschriebenen Pervaporationsprozess an. Man überströmt dabei die K0H-Matrix mit relativ trockenem (trocken = arm an Wasserdampf) H₂ Gas. Das Gas feuchtet sich in der K0H-Matrix an und transportiert das Produktwasser der H₂-0₂-Reaktion in Dampfform aus der Brennstoffzelle aus.
   Um den Wasserdampf abzuscheiden und aus dem System zu entfernen, ist in einem immobilen Bennstoffzellen-System ein Wasserstoffkreislauf vorgesehen. Dabei verlässt das gesättigte Gas die Brennstoffzelle und wird in einem Kondensatwärmetauscher abgekühlt, wobei der grösste Teil des H₂0-Dampfes kondensiert. Das Kondensat wird in einem angeschlossenem Separator von dem Wasserstoff getrennt und "getrocknet" der Brennstoffzelle wieder zugeführt. Unter Einfluss der Erdschwere (g-Bedingungen) ist die Abscheidung des Kondensats problemlos möglich. Bei Schwerelosigkeit (Null-g-Bedingungen) treten erhebliche Probleme auf, für welche in der einschlägigen Patentliteratur (CH-A-594439, EP-A-287035) schon Lösungen beschrieben sind.

Aufgabe der Erfindung ist, bei einem Brennstoffzellen-System der oben beschriebenen Art die blasenfreie Abscheidung des Wassers in ein weiter verarbeitendes System, das zum Beispiel ein Lebenserhaltungssystem für bemannte Raumfahrzeuge, wie einen Raumgleiter sein kann. Die blasenfreie Abscheidung soll nur geringe zusätzliche elektrische Energie benötigen; im H₂-Kreislauf soll nur ein geringer Druckverlust auftreten und der Wirkungsgrad der Separation soll hoch sein.

Die Lösung der Aufgabe ist Gegenstand des Hauptanspruchs und des Unteranspruchs.

Die Erfindung wird nachfolgend anhand einer Figur näher erläutert.

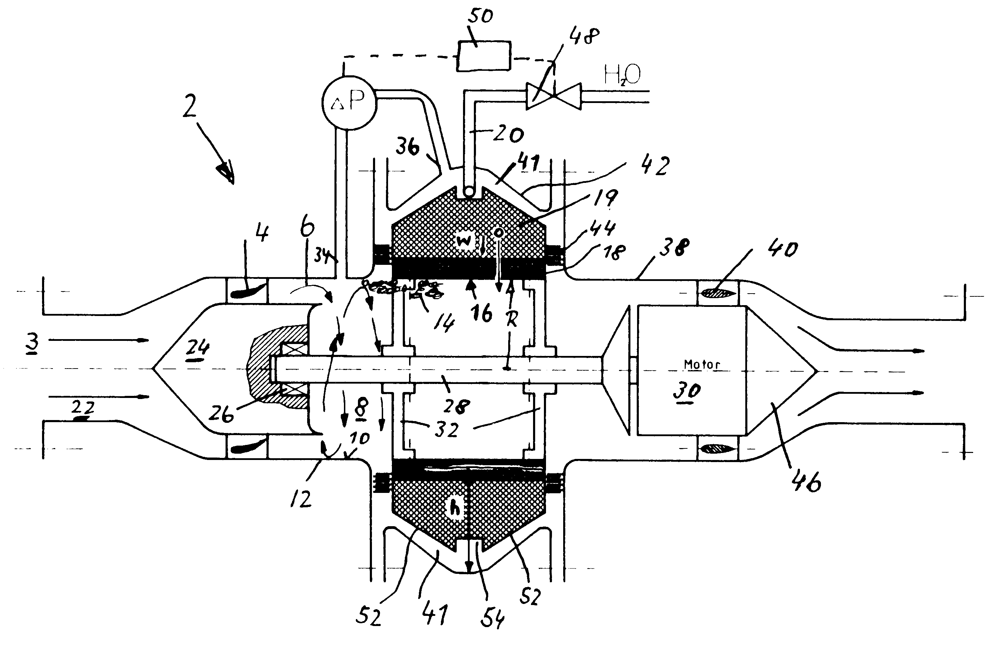

Die Figur zeigt eine Schnittansicht durch einen erfindungsgemässen Separator.

In einem Separator 2 wird mittels eines axialen Schaufelgitters 4 ein H₂-H₂0-Gemisch 3 (H₂-Wassergemisch) in eine Drallströmung 6 gezwungen, die zum Aufbau eines Zentrifugalfeldes in einem Axialzyklon 8 führt. Mit Hilfe des Zentrifugalfeldes werden die Wassertropfen, die aus einem nicht gezeigten Kondensator kommen, an die Wand 10 des zylindrischen Gehäuses 12 geschleudert. Es bildet sich dabei ein Blasenschaum 14, der zu einem rotierenden Zylinder 16 gelangt, der aus feinporigem Material 18, und konzentrisch dazu angeordnetem hochporösem Material 19 besteht. Der Zylinder 16 entfernt das Kondensatwasser aus dem Blasenschaum und führt es einem Wasseraustrittsventil 48 zu.

Der Separator 2 besteht aus den nachfolgend aufgelisteten Bauteilen: Einlaufstutzen 22, axiales Schaufelgitter 4 im Axialzyklon 8, Lagerbock 24, Gleitlager 26, zylindrisches Gehäuse 12, Welle 28, Motor 30, Speichen 32, feinporiges Material 18, hochporöses Material 19, Pitotrohr 20 zur Wasserentnahme, Druckmeßstellen 34 und 36, Auslaufgehäuse 38, Entdrallvorrichtung 40.

### Funktionsbeschreibung:

Ein Gas-Wassergemisch 3 gelangt durch den Einlaufstutzen 22 in das axiale Schaufelgitter 4. Hier wird die durch Pfeile angedeutete Drallströmung 6 erzeugt, deren Umfangsgeschwindigkeit massgebend für die erzeugte Zentrifugalkraft ist. Aufgrund der erzeugten Fliehkräfte gelangen aus dem Gas-Wassergemisch Teilchen mit höherer Dichte (Wassertropfen) an die Innenwand des sich drehenden Zylinders 16.

Das Wasser wird vom feinporigen hydrophilen Werkstoff 18 des sich drehenden Zylinders 16 aufgesaugt und zusätzlich durch die Zentrilfugalkraft in das Material hineingedrückt. Die Zentrifugalkraft an der Innenseite des Zylinders 16 ist eine mathematische Funktion aus der Drehzahl des Motors, die ungefähr 1500 Umdrehungen pro Minure beträgt und dem Innenradius R des Zylinders 16. Im hochporösen Werkstoff 19 des Zylinders 16 wird ein sehr hoher Widerstandsbeiwert erzeugt, der ein Mitdrehen des abgeschiedenen Wassers im Ringraum 41 bewirkt. Dieser Wasserraum wird nach aussen durch eine Ringwand 42 und nach innen durch eine berührungslose Dichtung 44 begrenzt.

Gasblasen, die sich in den Werkstoffen 18, 19 oder im Ringraum 41 befinden, wandern mit der Radialgeschwindigkeit w in das Zentrum des Separators zurück und gelangen so wieder in den Gasstrom; dies ist durch einen Pfeil angedeutet.

Die Radialgeschwindigkeit w ergibt sich aus dem Stokschen Gesetz und hängt hauptsächlich vom Dichteunterschied der Medien und von der Zentrifugalkraft ab.

Die Energie für den Antrieb des Zylinders 16 liefert der Motor 30, der vorzugsweise ein bürstenloser Gleichstrommotor ist. Der Zylinder 16 ist mittels Speichen 32 mit der Welle 28 des Motors 30 verbunden. Vom Wasser befreites Gas umströmt den Motor 30 und bewirkt einen Kühleffekt. Die Entdrallvorrichtung 40 befreit die Strömung vom Restdrall, wobei eine Rückgewinnung des Drucks erfolgt. Ausserdem dient die Entdrallvorrichtung 40 als Halterung für den Motor 30 und als Kabeldurchführung (nicht gezeigt). Zur Verbesserung der Strömungsführung ist ein Konus 46 vorhanden.

Das im Ringraum 41 und in den Werkstoffen 18 und 19 des Zylinders 16 gespeicherte Separationsmedium Waser wird mittels der Entnahmeleitung 20 abgeführt. Dazu wird ein Ventil 48 intermittierend geöffnet, wobei das Signal zur Öffnung von den beiden Druckmessleitungen 34, 36 in einer Regelelektronik 50 ermittelt wird.

Die Druckmessleitung 34 gibt den statischen Druck im System an. Druckmessleitung 36 zeigt den statischen Druck im System plus den statischen Druckanstieg infolge Zentrifugalbeschleunigung und Spiegelhöhe h des Wasserstands im Ringraum 41 an. Bei konstanter Motordrehzahl ist auch die Beschleunigung konstant; der statische Druckanstieg hängt dann nur noch von der Spiegelhöhe des Wassers im Ringraum 41 ab.

Der Zylinder 16 besteht aus einer Kombination von feinporigem Material 18 und hochporösem Material 19. Das feinporige Material 18 hat vorzugsweise eine konstante Wandstärke und eine Porosität von ca. 35% bei einem Porenradius von 35 µm. Das Material hat hydrophile Eigenschaften. Es ist ein Sintermetall oder eine Keramik oder ein Kunststoff.

Auf das feinporige Material ist das hochporöse Material 19 aufgepresst. Es ist geometrisch ein Zylinder mit schräg verlaufenden Flanken 52, wobei sich in der Mitte eine Nut 54 befindet, in die das Wasserentnahmerohr 20 hineinragt. Das Material hat eine Porosität von 95% bei einem Porendurchmesser von ca. 1 bis 1,5 mm. Es ist ein Metallschwamm, eine Keramik oder ein Kunststoff.

## Patentansprüche

1. Bei Schwerelosigkeit wirksam arbeitender Separator zur Trennung eines H₂-H₂O-Gemisches, bestehend aus einem zylindrischen Gehäuse (**12**) mit einem Einlaufstutzen (**22**), einem Axialzyklon (**8**) und einem Gasauslaufstutzen, wobei folgende Bauteile hintereinander im Axialzyklon angeordnet sind:
- ein axiales Schaufelgitter (**4**),
- ein rotierender Zylinder (**16**) mit zwei konzentrisch angeordneten Materialschichten, wobei die innere Schicht aus feinporigem Material (**18**) und die äussere Schicht aus hochporösem Material (**19**) besteht,
- eine Wasserentnahmeleitung (**20**) in einem Ringraum (**41**) am Umfang der Schicht aus hochporösem Material (**19**) und
- eine Entdrallvorrichtung (**40**) vor dem Gasauslaufstutzen.

2. Separator nach Anspruch 1, **dadurch gekennzeichnet,** dass das feinporige Material (18) eine Porosität von ca. 35% bei einem Porenradius von 35 µm aufweist und das hochporöse Material (19) eine Porosität von ca. 95% bei einem Porendurchmesser von 1 bis 1,5 mm aufweist.

## Claims

1. Separator, which operates effectively in conditions of zero gravity, for the separation of an H₂-H₂O mixture comprising a cylindrical casing (12) with an inlet nozzle (22), an axial cyclone (8) and a gas outlet nozzle, wherein the following components are disposed behind one another in the axial cyclone:
- an axial blade arrangement (4);
- a rotating cylinder (16) with two concentrically disposed layers of material, wherein the inner layer consists of fine-pored material (18) and the outer layer consists of highly porous material (19);
- a water-removing pipe (20) in an annular chamber (41) at the periphery of the layer of highly porous material (19); and
- a de-spinning device (40) in front of the gas outlet nozzle.

2. Separator according to claim 1, characterised in that the finely porous material (18) has a porosity of approximately 35% in the case of a pore radius of 35 µm, and the highly porous material (19) has a porosity of approximately 95% in the case of a pore diameter of 1 to 1.5 mm.

## Revendications

1. Séparateur fonctionnant de manière efficace en apesanteur et destiné à la séparation d'un mélange H₂-H₂O, comprenant un carter cylindrique (12) avec une tubulure d'entrée (22), un cyclone axial (8) et une tubulure de sortie de gaz, les éléments suivants étant disposés en succession dans le cyclone axial :
- une grille d'aubes profilées axiale (4),
- un cylindre (16) tournant avec deux couches de matériaux concentriques, la couche intérieure étant constituée d'un matériau microporeux (18) et la couche extérieure, d'un matériau très poreux (19),
- une conduite de prélèvement d'eau (20) dans un espace annulaire (41) à la périphérie de la couche de matériau très poreux (19), et
- un dispositif de contre-rotation (40) en amont de la tubulure de sortie de gaz.

2. Séparateur selon la revendication 1, caractérisé en ce que le matériau microporeux (18) présente une porosité d'environ 35 % pour un rayon des pores de 35 µm, et que le matériau très poreux (19) présente une porosité d'environ 95 % pour un diamètre des pores de 1 à 1,5 mm.
